(19) Europäisches Patentamt
European Patent Office
Office européen des brevets

(11) **EP 4 628 924 A1**

(12) **EUROPEAN PATENT APPLICATION**

(43) Date of publication:
**08.10.2025  Bulletin 2025/41**

(21) Application number: 24168127.9

(22) Date of filing: **02.04.2024**

(51) International Patent Classification (IPC):
**G01S 7/03** (2006.01)  **G01S 13/931** (2020.01)

(52) Cooperative Patent Classification (CPC):
**G01S 7/03; G01S 13/931;** G01S 7/038;
G01S 2013/93275

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Aptiv Technologies AG
8200 Schaffhausen (CH)**

(72) Inventors:
• **VOLLBRACHT, Dennis
  40721 Hilden (DE)**

• **KAZIMI, Sadam Hussain
  42115 Wuppertal (DE)**
• **GHASEMIAN, Pedram
  44892 Bochum (DE)**
• **BUSCH, Mathias
  42389 Wuppertal (DE)**

(74) Representative: **Bardehle Pagenberg
Partnerschaft mbB
Patentanwälte Rechtsanwälte
Prinzregentenplatz 7
81675 München (DE)**

(54) **RADAR BEHIND LICENSE PLATE**

(57)  The present disclosure relates to a radar system for automotive applications. The radar system comprises a multitude of radar antennas which are arranged on an enlarged two-dimensional area. The present disclosure further relates to a component of a car, in particular a front component of a car. The component comprises a radar housing, and a radar system supported by the radar housing.

Fig. 7

**Description**

Technical area

The present invention relates to a radar system for automotive applications, and to a component of a car, in particular a front component of a car.

Technical background

Radar sensors are used in automotive applications (e.g. in motor vehicles such as cars) to provide safety and comfort functions, for example in so-called Advanced Driver-Assistance Systems (ADAS). Recent developments are pushing radar systems to provide high-quality and reliable data which are used by a vehicle's control systems to analyze the environment of the car, to detect possible targets in the vehicle's surrounding, and to take appropriate control measures if necessary.

Front radar sensors, i.e. radar sensors installed in a front part of an automotive vehicle, are usually designed to have very high gain and high resolution at long distances such that they can be used for adaptive cruise control, automatic emergency braking, direction of arrival estimation, lane-changing and/or lang-keeping assistance. Front radar sensors are typically installed behind the front bumper of a vehicle, or in the front vehicle fascia. This can negatively the aerodynamic and aesthetic properties of the vehicle. To increase performance of ADAS, radar sensors with larger physical apertures are desired which achieve higher angular resolution. However, such radar sensors are difficult to fit into front vehicle bumpers or into the front vehicle fascia.

Radar sensors in automotive applications are usually integrated in the outer shell of a vehicle, where they are covered by radomes/bumpers/fascia. The varying material properties of the elements covering the radar sensors can massively influence the radar signal quality and can have a massive negative impact on radar detection performance and accuracy. Also, the radar signal may be attenuated by several dB, which can reduce the overall detection distance of the ADAS. Further, the material properties of molded plastic parts and semi-metallic surface coatings are often heterogeneous, which can lead to unpredictable signal distortions, such as phase distortions of the received signal.

It is thus an object of the present disclosure to provide for an improved radar system for automotive applications, particularly to provide for a radar system for automotive applications with increased angular resolution or sub degree level resolution.

Prior art reference JPH11160426A discloses a car radar fitted at the rear of a license plate. However, an improved radar system is desired which reduces manufacturing costs and facilitates integration into a vehicle. In addition, improved integration of a front radar system is desired.

A solution is provided according to the subject matter of the independent claims.

Summary of the invention

An aspect of the present disclosure relates to a radar for automotive applications. The radar system has a multitude of radar antennas being arranged on a two-dimensional area. The two-dimensional area may be rectangular. The two-dimensional area may be an antenna placement board or may be defined by the placement of the antennas themselves. The two-dimensional area on which the radar antennas are arranged has a length of between 190 and 520 mm (preferably between 275 and 305 mm), and a height of between 80 and 220 mm (preferably between 100 and 110 mm). At least two of the multitude of antennas are arranged on opposing edges of the two-dimensional area. The two-dimensional area may be a planar area. The antennas may be arranged anywhere on the two-dimensional area, given that two antennas are arranged on opposing edges of the two-dimensional. The distance between these two antennas thus corresponds to a diagonal extension of the two-dimensional area. For example, the antennas may be arranged such that a rectangular contour can be spanned around the antennas having a length of between 275 and 310 mm, and a height of between 100 and 120 mm, and two antennas being on opposing edges of the rectangular contour.

Since the radar antennas are arranged on a relatively large two-dimensional area, the radar system has an improved, sub degree level resolution. For example, due to the large aperture which results from the relatively large area for placing the antennas, a 3dB resolution of 0,2° in azimuth and 0,9° in elevation can be achieved.

According to a preferred embodiment of the present disclosure, such a radar system may be installed behind a vehicle's license plate. The inventors have found that the dimensions of the two-dimensional area are particularly advantageous for the placement of the radar system behind a vehicle's license plate. Most license plates have a pre-defined size. European license plates, according to DIN 74069, have a length of 520 mm and a height of 110 mm. The radar system according to the present disclosure can be arranged behind such license plate while achieving improved resolution. US license plates have a standard license plate size of about 305×152 mm, license plates in the PR China have a size of 440×140 mm, and license plates in Australia and other pacific rim countries have size of about 372×135 mm. Due to the proposed dimensions of the two-dimensional area for antenna placement, the radar system can be installed behind most or even any of these license plates while providing for improved resolution.

Preferably, the two-dimensional area has a length in the area of 210 and 480 mm, further preferred in the range of 230 and 440 mm, further preferred in the range of 250 and 400 mm, further preferred in the range of 260 and 360 mm, further preferred in the range of 270 and 320 mm, further preferred in the range of 275 and 310 mm. Particularly preferred, the two-dimensional area has a length of about 305 mm and a height of about 110 mm. This area is common to the areal size of most license plates. The radar system can thus be used as a universal component in vehicles in different countries/regions, irrespective of the actual license plate size. A car manufacturer can install the radar system in a particular model, which is then compatible with the license plate later attached to the vehicle.

Preferably, the radar system comprises at least two radar subunits arranged on the two-dimensional area. Each radar subunit may have at least one transmitting (TX) channel and at least one receiving (RX) channel. Each channel may be connected to a separate one of the antennas. One channel may be connected to two of the antennas. Further preferred, each of the subunits is implemented as a monolithic microwave integrated circuit (MMIC). It will be appreciated that the radar system may comprise more than two radar subunits arranged on the two-dimensional area, and that each radar subunit may have more than one TX and one RX channels. Each of the radar subunits may cover the two-dimensional area, providing for improved resolution. The two-dimensional is large enough to accommodate, for example, four or six radar subunits with three to four TX channels and four to eight RX channels each. This allows for designing radar systems with sub degree resolution and advanced functionality.

Preferably, the antennas are arranged only on a peripheral section of the two-dimensional area, and a central section of the two-dimensional area is free of the antennas. For example, when the radar system is installed behind a vehicle's license plate, the arrangement of the antennas on the peripheral section of the two-dimensional area guarantees that the performance of the radar system is not (or only little) affected by the characters which are typically arranged on a center section of the license plate. The material and thickness of the vehicle's license plate may be chosen such that reflection of emitted radar radiation at the license plate is reduced. This may mean that the radar system has a 2D spatial homogeneous complex transmission coefficient.

Preferably, the antennas connected to transmitting channels of the radar subunits are arranged on one or more short edges of the two-dimensional area, and the antennas connected to receiving channels of the radar subunits are arranged on one or more long edges of the two-dimensional area. This provide for a universal configuration that can be used with most standardized license plates. Preferably, the antennas of the radar subunits are arranged in an L-shaped configuration. Such configuration particularly provides for a universal configuration that can be used with most standardized rectangular license plates.

The unique MIMO configuration at the edges of the license plate area advantageously allows for integrating bigger antennas for a different application e.g. parking and SCM into to a single front radar system or integrate additional antenna that could look into corners and give the radar system additional FoV coverage replacing corner radars.

Another aspect of the present disclosure relates to a component of a vehicle, in particular a front (or rear) component of a vehicle. The vehicle may be any vehicle. Preferably, the vehicle is a motor vehicle such as a car, truck, or bus. The component may be a multi-piece element as is apparent from the present disclosure. The component may constitute a part of the vehicle. The component may constitute a part of the vehicle front. For example, the component may be part of the front fascia.

The component comprises a radar system as described herein. Preferably, the component further comprises a radar housing, which may be configured to support the radar system including the two-dimensional area with the radar antennas.

Preferably, the component comprises a license plate holder. In the component, the radar system may be supported by the radar housing such that the radar system is arranged behind the license plate holder and such that the two-dimensional area of the radar system is covered by the license plate holder. The license plate holder may be a common license plate holder, such as e.g. a license plate frame, typically made of plastic materials. The license plate holder may have a size according to national regulations. For example, the license plate holder may be sized and configured to support a European license plate according to DIN 74069, which has a length of 520 mm and a height of 110 mm. In another example, the license plate holder may be sized and configured to support a Chinese license plate having a length of 440 mm and a height of 140 mm. In another example, the license plate holder may be configured to support a license plate as required in parts of South America and Australia having a length of 372 mm and a height of 135 mm. In another example, the license place holder may be sized and configured to support a license plate as required in the United States, i.e. having a length of about 305 mm and a height of about 152 mm. The license plate may be a separate plastic part, e.g. a plastic license plate frame. Alternatively, the license plate may be an integral part of the vehicle's shell, of its fascia or bumper. As such, the license plate may be fixed directly to the vehicle's shell, the fascia or bumper.

The area behind the license plate (holder) is sufficiently large to install the relatively large radar system. In this manner, a vehicle can be equipped with an improved radar system having a large physical aperture and thus an improved, sub degree level resolution. Further, the integration of the radar system behind the license plate allows for aesthetic integration of the radar system in the vehicle. The effect of the license plate and license plate on the radar system characteristics is controllable and the same for different vehicles. No fascia and bumper integration process is needed, and the same radar system design can be provided to the different vehicle manufacturers for installation into vehicles having the same license plate standard. A large radar surface is provided without requiring particular modifications to the body of the vehicle. In other words, the body can be designed irrespective of the installation of the radar system, as the radar system is installed behind the required license plate and optimally makes use of the area commonly covered by most license plates.

Preferably, the at least two of the multitude of antennas arranged on opposing edges of the two-dimensional area of the radar system are attached to a frame of the license plate holder. Preferably, all antennas of the multitude of antennas are attached to the frame. The antennas of the radar system may be part of the frame of the license plate holder, i.e. the frame which encompasses a license plate supported by the license plate holder. The antennas are thus not covered by a license plate, such that the influence of the license plate on the radar signal does not need to be taken into consideration.

Preferably, the component further comprises a plastic license plate attached to the license plate holder. The license plate is of plastic, and may for example be made of Polybutylene terephthalate (PBT). Compared to aluminum license plates, plastic license plates cause less disruption to the functionality of the radar system. The license plate may be a 3D license plate, where the individual characters (letters, numbers) are riveted to the license plate base plate or where the characters are embossed in the base plate, to provide for a relief-like look. A retro-reflective layer may be provided on the base plate, for example between the base plate and the characters, to enhance reflection characteristics of the license plate.

In a particularly preferred embodiment, the license plate comprises a base plate and character elements attached to the base plate. The base plate is of plastic, e.g. of PBT, and may have an overall size according to national regulations, e.g. having a length of 52 cm and a height of 11 cm according to DIN 74069. The character elements may be made of plastic and may be attached to the base plate by any suitable means. For example, the character elements may be riveted to the base plate or may be assembled to the base plate by means of assembly pins and punching and pressing techniques. The material and thickness of the base plate and of the characters may be chosen such that reflection of emitted radar radiation at the license plate is reduced. This may mean that the radar system has a 2D spatial homogeneous complex transmission coefficient. To optimize the radar characteristics, different materials may be used for the character elements and the base plate, and the thicknesses of the character elements and of the base plate may be varied. Also, the thickness and material of a retro-reflective layer provided between the base plate and the character elements may be varied to optimize the radar characteristics of the radar system installed behind the license plate. The skilled person will understand that the base plate and character elements should be made of different materials in order to provide for impedance matching and for reducing multiple reflections on the various interfaces.

In another particularly preferred embodiment, the license plate comprises a base plate. The base plate is of plastic and has an overall size according to national regulations, as described above. Further, local deformations of the base plate define characters of the license plate. The base plate is formed as an integral part and has a uniform thickness. In other words, the characters of the license plate may be defined by a relief of the base plate. Such a base plate may be produced by means of injection molding, as will be appreciated by the skilled person. The material and thickness of the base plate can be optimized for reduced transmission losses and thus to optimize the radar characteristics of the radar system installed behind the license plate.

In another particularly preferred embodiment, the license plate comprises a base plate, being of plastic, and having an overall size according to national regulations, as described above. Also in this embodiment, local deformations of the base plate define characters of the license plate, and the base plate has a uniform thickness. Further, the local deformations of the base plate comprise a first material, and the base plate comprises a second material different from the first material at sections not defining the characters of the license plate. In other words, those sections of the base plate defining the characters may be made of the first material, while the other sections of the base plate may be made of the second material. Due to difference in material properties (e.g. permittivity), the section defining the characters can be optimized to be more transparent for higher frequency bands, thereby optimizing the radar characteristics of the radar system installed behind the license plate.

Particularly preferred, the distance between the license plate and the radar system and/or the thickness of the base plate is chosen such that reflection of emitted radar radiation at the license plate is reduced. This may mean that the radar system has a 2D spatial homogeneous complex transmission coefficient. In this manner, the radar characteristics of the radar system installed behind the license plate is optimized.

In another particularly preferred embodiment, the license plate comprises a base plate and character elements attached to the base plate, as described above. The component further comprises an optically transparent layer covering the base plate and character elements. The optically transparent layer may for example be made of a transparent epoxy resin. The optically transparent layer comprises recesses on its inner surface dimensioned to receive the character elements. In this manner, the optically transparent layer may fully contact the character elements (in the protrusions of the optically transparent layer) as well as the base plate or a retro-reflective layer provided on the base plate, avoiding possible material-air interfaces. The outer surface of the optically transparent layer is flat, to improve the reflection characteristics. In this manner, by providing a homogeneous layer having a homogeneous electromagnetic behavior covering the entire two-dimensional license plate area, transmission characteristics. Further, accumulation of mud at the raised edges of the character elements is prevented, which would impair the functionality of the radar system installed behind the license plate.

The skilled person understands that such an optically transparent layer may also be provided with embodiments where the characters are defined by deformation of the base plate.

Particularly preferred, the electromagnetic properties of the optically transparent layer essentially match the electromagnetic properties of the character elements. With this, the entire area of the license plate is providing improved transmission characteristics allowing for using MIMO configuration antennas in the radar system installed behind the license plate.

As will be appreciated by the skilled person, the antennas of the radar system may be arranged on peripheral sections of the two-dimensional area of the radar system, which are not covered by characters / character elements of the license plate. With this, possible influences of the characters / character elements on the transmission characteristics may be neglected. Alternatively or in addition thereto, one or more of the antennas may be arranged on central sections of the two-dimensional area of the radar system, wherein these antennas are preferably configured for near range parking applications. For example, the antennas may cover the entire two-dimensional area, which may be of the same size or slightly smaller than the extension of the license plate. With this, the characteristics of the radar system are improved.

As will further be appreciated by the person skilled in the art, the present disclosure is also directed to a component of a vehicle which does not necessarily comprise a radar system with the large two-dimensional area as described herein. In other words, a further aspect of the present disclosure relates to a component of a vehicle comprising a radar housing and a license plate holder (and preferably a license plate). Certain aspects of the invention are directed to the license plate alone, wherein the license plate may be configured as described herein. Another aspect of the present disclosure relates to a license plate with the advanced shape as described above to reduce reflection of emitted radar radiation. Another aspect of the present disclosure relates to the arrangement of antennas on the edges of a two-dimensional area of any size. Such configuration may provide for a universal configuration of the radar system that can be used as a front radar possibly in combination with a license plate of any shape. The different aspects may be combined with the features described above/herein, as will be appreciated by the person skilled in the art.

Description of preferred embodiments

In the following, the invention will be described with reference to the attached figures. In the figures, similar elements are provided with the same reference signs.

Fig. 1 illustrates schematically a radar system according to an embodiment of the invention;
Fig. 2 illustrates the configuration of channels and antennas of a radar system according to an embodiment of the invention;
Fig. 3 illustrates the configuration of channels and antennas of a radar system according to another embodiment of the invention;
Fig. 4 illustrates the configuration of a radar system according to another embodiment of the invention;
Fig. 5 illustrates a vehicle according to an embodiment of the invention;
Fig. 6 illustrates the rear side of a component of a vehicle according to an embodiment of the invention;
Fig. 7 illustrates a top view of the vehicle of Fig. 5;
Fig. 8 illustrates elements of a license plate according to an embodiment of the invention;
Fig. 9 illustrates an optimization model according to an embodiment of the invention;
Fig. 10 illustrates a base plate of a license plate according to an embodiment of the invention;
Fig. 11 illustrates an optimization model according to an embodiment of the invention;
Fig. 12 illustrates elements of a license plate according to an embodiment of the invention.

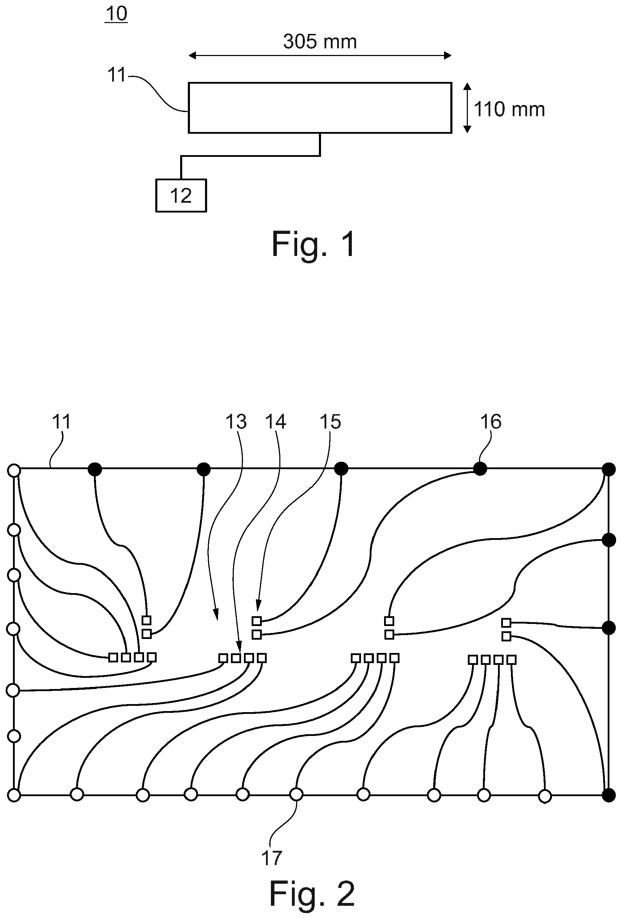

Fig. 1 illustrates a radar system 10 according to an embodiment of the invention. The radar system 10 comprises a multitude of radar antennas being arranged on a two-dimensional area 11. Further, the radar system 10 comprises a control unit 12 for controlling the antennas. The two-dimensional area 11 has a rectangular form with a length of 305 mm and a height of 110 mm. With these dimensions, the antenna array can easily be placed behind a license plate having a length of 52 cm and a height of 11 cm according to DIN 74069. With these dimensions, the radar system can also easily be installed behind a license plate used in the USA, which has a length of about 32 cm and a height of about 15 cm. The two-dimensional area 11 may be the area of an antenna array, or of an antenna PCB, as will be appreciated by the skilled person.

In the embodiment of Fig. 1, the radar system 10 has a MIMO configuration with four MMIC chips each having 2 transmitting (TX) and 4 receiving (RX) channels, each of which occupies the two-dimensional area. This configuration has a MIMO virtual length of 195 lambda in azimuth and height of 50 lambda in elevation. The resulting 3dB resolution in azimuth is 0,2°, while the 3dB resolution in elevation is 0,9°.

Fig. 2 illustrates the MIMO configuration with four MMIC chips 13 and routing lines on the two-dimensional antenna array of Fig. 1. As described, each MMIC chip 13 has 2 TX channels 15 and 4 RX channels 14. Each channel is connected to a separate antenna 16 or 17. The MMIC chips may represent radar subunits in the sense of the present disclosure.

As can be seen from the embodiment of Fig. 1 and 2, the antennas 16, 17 are arranged on the outer circumference of the two-dimensional area 11. In other words, the antennas 16, 17 are arranged on a peripheral section of the two-dimensional area 11. On each one of the corners of the two-dimensional area 11, an antenna 16, 17 is arranged. Thus, 2 TX antennas and 2 RX antennas are arranged on the corners of the two-dimensional area 11.

The two-dimensional area 11 is sufficiently large to accommodate the four or six MMIC chips 13, as well as the required antennas 16, 17. Further, the arrangement of the antennas 16, 17 provides for the improved resolution of the radar system 10.

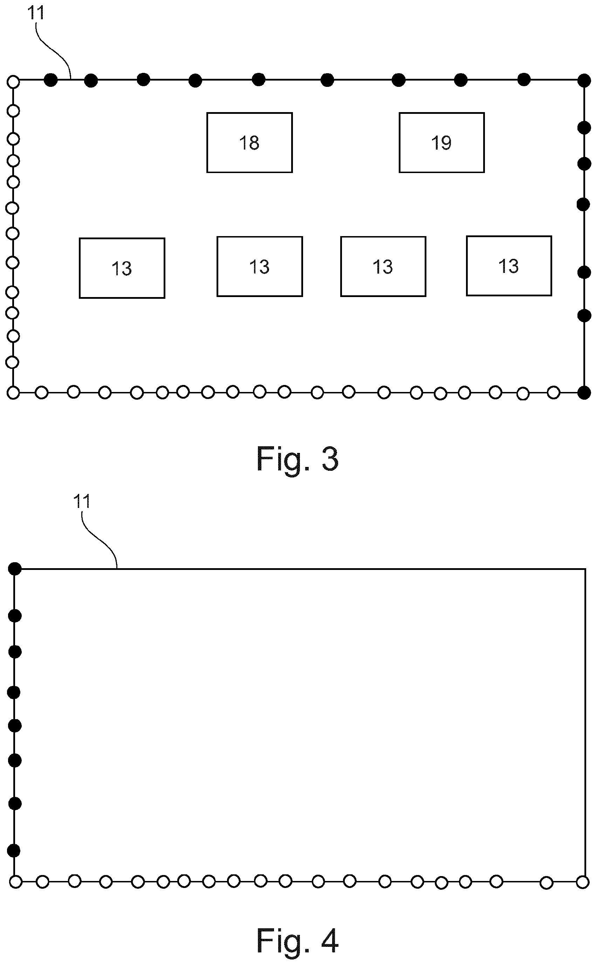

Fig. 3 illustrates another embodiment of radar channel and antenna configuration that can be provided on the two-dimensional area 11 of the radar system 10 of Fig. 1. Three MMIC chips 13 are schematically illustrated. In the given embodiment (although not shown), each radar subunit 13 (embodied as MMIC chips) comprises 4 TX channels and 8 RX channels, and each channel is connected to a separate antenna.

The two-dimensional area 11 is sufficiently large to accommodate not only the four MMIC chips 13, but can also accommodate further chips/ different antennas providing for additional functionality of the radar system. In the embodiment of Fig. 3, a street condition monitoring unit 18 and a parking assistance unit 19 are arranged on the two-dimensional area 11. The street condition monitoring unit 18 and parking assistance unit 19 provide for street condition monitoring and parking assistance, as generally known in the art. The street condition monitoring unit 18 and parking assistance unit 19 each comprises respective antennas. The radar subunits 13 are connected to the street condition monitoring unit 18 and parking assistance unit 19. The radar system is thereby provided with improved functionality.

In preferred embodiments dual mode antennas are integrated in the radar system, which is enabled by the large space available on the antenna array. The system can preferably perform standard operation at 76 - 77 GHz as that of a front radar sensor with sub degree resolution, and additionally from 77 to 81 GHz for street condition monitoring and for parking applications. The system may for example comprise four MMICs. In the 76 - 77 GHz mode, the four MMICs may be operated in the usual manner as a front radar. In the 80 GHz mode, three MMICs may be used to feed SCM antennas for street condition monitoring, while the fourth MMIC may use dual mode antennas where single slot V Pol antennas are activated at from 77 - 81 GHz for extended Field of View in elevation for parking applications. These single slot antennas with e.g. 4 TXs and 8 RXs may form different MIMO at 80 GHz. As will be appreciated by the skilled person, any suitable frequency band may be used, given the respective application (e.g. street condition monitoring, parking applications, etc.).

It will be appreciated that the configurations of Figs. 2 and 3 can be placed almost behind all standard license plates, since the common area of most license plates has a length of 305 mm and a height of 110 mm.

In a preferred embodiment, the radar system includes two or more radar subsystems. The radar system may comprise a long range radar subsystem, a ultra small range radar subsystem, and a street condition monitoring subsystem. The respective antennas are arranged on the two-dimensional area of the radar system. The two-dimensional area is sufficiently large to accommodate the antennas of these different subsystems.

Fig. 4 illustrates another embodiment of the radar configuration on the two-dimensional area 11 of the radar system 10 of Fig. 1. Transmitting antennas are arranged on one short edge of the two-dimensional area 11, while the receiving antennas are arranged on the long edge of the two-dimensional area 11. The antennas are arranged in an L-shape configuration. Again, although not shown, the required channels and units may be provided, as described above.

The unique MIMO configuration at the edges of the license plate area advantageously allows for integrating bigger antennas for a different application e.g. parking and SCM into to a single front radar system or integrate additional antenna that could look into corners and give the radar system additional FoV coverage replacing corner radars.

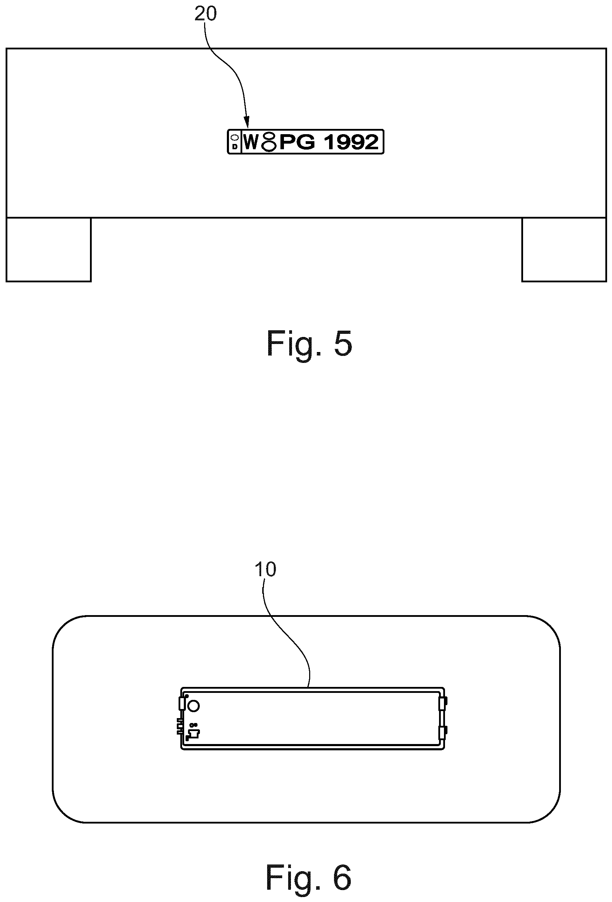

Fig. 5 illustrates the front side of a vehicle. At the vehicle's front, a standardized plastic license plate 20 is attached to a corresponding license plate holder. The license plate holder in turn is supported by the front bumper of the vehicle. Preferably, the front bumper and the front fascia of the vehicle is free of radar sensors. Behind the license plate 20, a radar system as described herein is installed.

Fig. 6 illustrates the rear side of a component of a vehicle, for example of the front body of the vehicle illustrated in Fig. 5. Behind the license plate, a radar system 10 as described herein is installed such that the antennas of the radar system 10 are directed to the front of the vehicle.

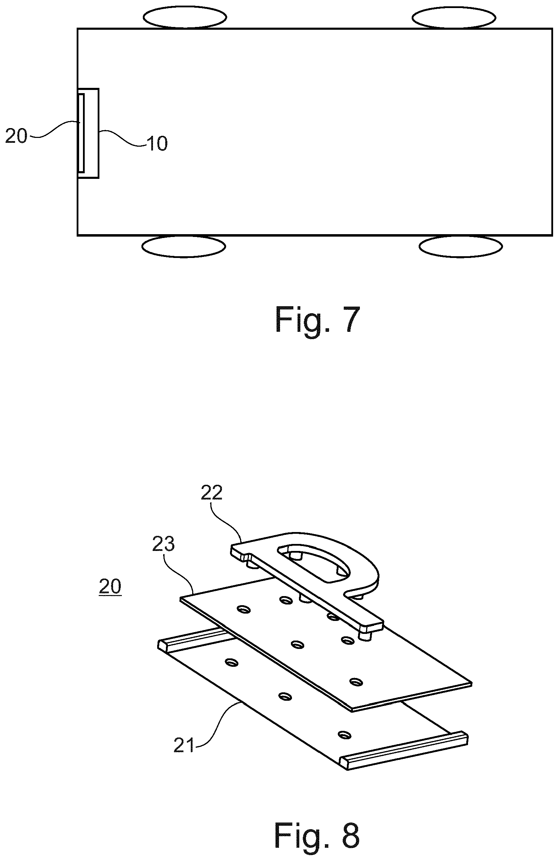

Fig. 7 illustrates a top view of the vehicle of Fig. 5 including the component of Fig. 6. As can clearly be seen, the front side of the radar system 10 or its antenna array is covered by the license plate 20. The radar system 10 is dimensioned such to make use of the full spatial space covered by the license plate 20, thereby providing for improved resolution characteristics.

With the proposed system, large-scale radar antennas can be integrated into almost each vehicle without requiring additional simulation efforts, and without impairing aesthetic properties of the vehicles. Due to the larger physical antenna aperture, the radar performance is increased by 4 in azimuth and 1,5 in elevation, when compared to small-scale automotive radar system of the art. Fascia and bumper integration processes are eliminated. Further, manufacturing efforts are reduced, as the same antenna system can be installed in different vehicles. Further, the radar performance is increased as side effects resulting from coverage of bumpers or fascia are not occur any longer. Further, additional features like street condition monitoring and parking applications can be easily integrated.

The relatively large behind the license plate is beneficial for the integration of sub degree resolution radar sensors as well as dual-band, multi-band radar with diplexers, switches and filters, antennas, etc., with reduced crosstalk and improved isolation.

In an embodiment, the antennas of the radar system are arranged anywhere on the two-dimensional area, i.e. on central and peripheral sections thereof. In another embodiment, the antennas of the radar system are arranged only on a peripheral section of the antenna board. In particular, the antennas may be arranged such that they are not covered by the characters of the license plate. With such a configuration, the design and material properties and the characters does not need to be taken into account for the optimization of the radar system, as they do not influence the radar performance. Thus, implementation is possible with reduced efforts. With such a design, high compatibility with current production techniques and license plate dimension standards is provided for.

Fig. 8 illustrates separate elements of a license plate 20 according to an embodiment of the invention. The license plate 20 comprises a base plate 21 and a character element 22 (here: the letter "P"). The base plate 21 and the character element 22 are made of different plastic material. The license plate 20 further comprises a commonly used retro-reflective layer 23 which is arranged between the base plate 21 and the character element 22. The retro-reflective layer 23 consists of several micrometer thin layers with an overall thickness of 200-300 micrometer. The retro-reflective provides for improved visibility of the license plate 20. The character element 22 comprises assembly pins which allow for fixing the character element 22 to the base plate 20 by means of punching and pressing techniques. For this purpose, through holes are provided in the retro-reflective layer 23, and fixation holes in the base plate 21, as is directly apparent from Fig. 8.

As described, in certain embodiments the antennas are arranged only on a peripheral section of the antenna board, such that the antennas are not placed behind the characters of the license plate. For certain applications, for example dual-band radar applications, utilization of the entire available area behind the license plate is of particular interest. A bigger antenna board area allows for including different antenna structures, filters, etc. Also, in terms of integration, crosstalk and isolation, using the full available area behind the license plate is beneficial. Accordingly, in other embodiments of the invention, the antennas of the radar system are arranged not only on the peripheral section of the antenna board, but also in central sections thereof. In this manner, the entire area covered by the license plate is used for antenna arrangement. To optimize the radar performance, the thicknesses and materials of the license plate components are variable.

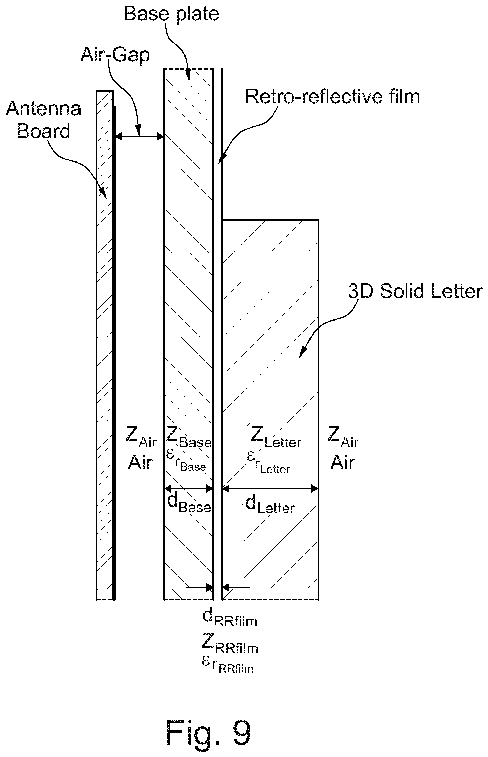

The optimization parameters are thickness and material of the retro-reflective layer 23, thickness and material of the base plate 21, and thickness and material of the character element 22. The character element 22 should be made of a different (plastic) material than the base plate 21 for impedance tapering purposes. By using the quarter wave slab impedance matching technique, the optimum thickness of the layers and optimal material selection can be obtained, based on relative permittivity base on an impedance matching method. The respective optimization model is illustrated in Fig. 9.

The relative dielectric constant of the retro-reflective layer $\varepsilon_{r\_RRlayer}$ is calculated from the permittivity values of the base plate $\varepsilon_{r\_Base}$ and of the character element $\varepsilon_{r\_Letter}$ as follows:

$$\varepsilon_{r_{RRlayer}} = \sqrt{\varepsilon_{r_{Base}} \times \varepsilon_{r_{Letter}}}$$

The thickness of the retro-reflective layer $d_2$ is calculated from the free space wavelength of the central operation frequency $\lambda_o$ as follows for boresight incident angle (with $N \in Z$):

$$d_2 = (2N + 1)\frac{\lambda_0}{4\sqrt{\varepsilon_{r_{RRlayer}}}}$$

For oblique incident angle $\theta_i$, the thickness $d_2$ is calculated as follows (with $N \in Z$):

$$d_2 = (2N + 1)\frac{\lambda_0}{4\sqrt{\varepsilon_{r_{RRlayer}} - \sin(\theta_i)^2}}$$

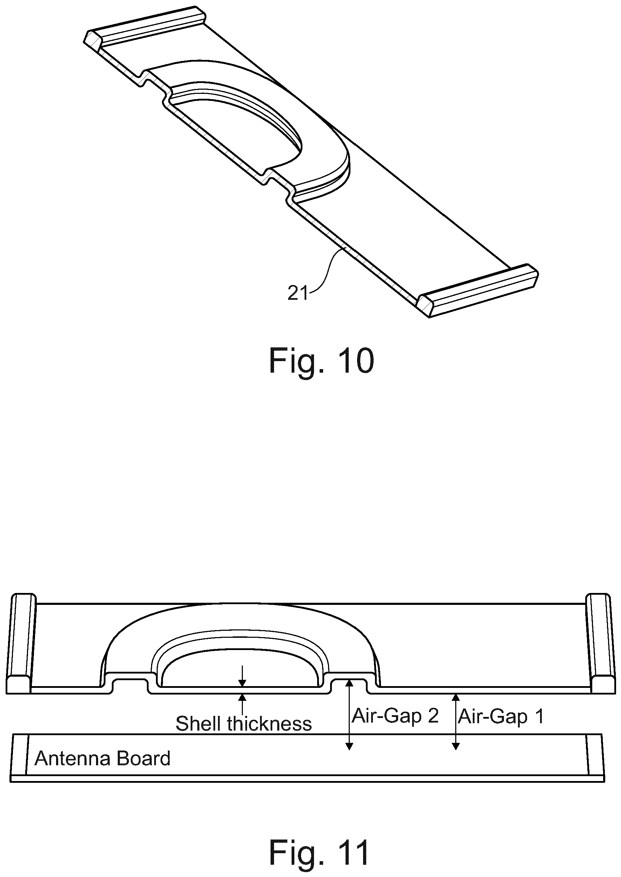

Fig. 10 illustrates a base plate 21 of a license plate according to another embodiment of the invention. A local deformation of the base plate 21 defines a character of the license plate. The base plate 21 is injection molded as a monolithic part, with constant thickness. The thickness of the base plate 21 at areas defining characters is the same as in areas remote from the characters. Further, the material of the base plate 21 is the same at areas defining characters is the same as in areas remote from the characters. In this manner, i.e. by providing the base plate and the characters as a monolithic element with homogeneous material and thickness, transmission losses can be reduced. Again, a retro-reflective layer may be provided on the base plate.

The monolithic design allows for full utilization of the license plate area for antenna arrangement, as described above. To optimize radar performance, the thickness and material of the base plate is to be taken into account, as well as the distance between the base plate and the antenna board, reducing the overall optimization efforts. Example materials comprise Polybutylene Terephthalate (PBT), Polypropylene (PP), Acrylester-Styrol-Acynitril (ASA), Polytetrafluoroethylene (PTFE). Any (plastic) material having suitable electromagnetic properties and the required mechanical strength may be used. Further, since assembly pins are not required, unwanted degradation of the radar radiation is avoided. Further, due to the relatively thin design, the dissipations of mm-Wave through the material decreases. This embodiment is particularly advantageous for long range radar applications, as signal distortion is reduced. The respective optimization model is illustrated in Fig. 11.

Setting an optimal distance between the antenna board and the base plate (airgap) is beneficial to minimize the effects of reflections caused by the license plate. The optimal airgap can be calculated as follows (with $N \in Z$, $N$ being a multiple of free space half wavelength in central frequency):

$$airgap = N \, \frac{\lambda_0}{2}$$

The optimal thickness of the base plate $d_1$ is essential for achieving an optimal performance of a mm-Wave radar system. The optimal base plate thickness can be calculated as follows (with $M \in Z$, $M$ being a multiple of half wavelength inside the material):

$$d_1 = M \, \frac{\lambda_0}{2\sqrt{\varepsilon_{r_{Base}}}}$$

In another embodiment, a different material may be used in the regions of the base plate where the characters are defined. The difference in permittivity and dissipation factor allows for modifying the license plate for another frequency band operation in the respective areas. For example, the character areas can be made more transparent for higher frequency bands. Still, the monolithic structure with the same material thickness is used. Apart from the usage of different materials, the design of the embodiment of Fig. 10 is used. Such a license plate may be manufactured with a two-shot complex injection molding process. The retro-reflective film may comprise non-metalized films. The retro-reflective film may have a thickness of 100-400 μm.

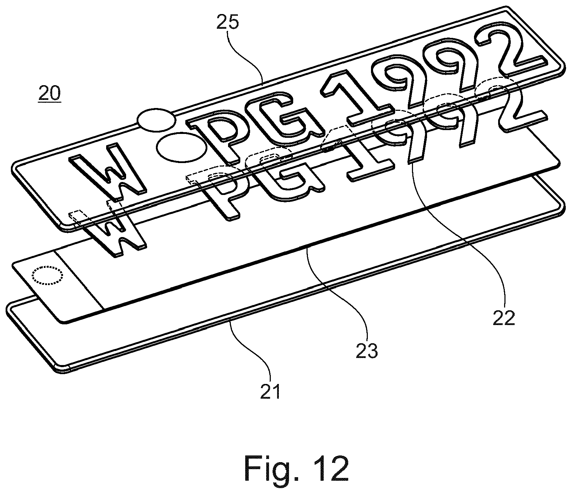

Fig. 12 illustrates elements of a license plate 20 according to another embodiment of the invention. The license plate 20 comprises a base plate 21, character elements 22, and a retro-reflective layer 23 between the base plate 21 and the character elements 22. Further, an optically transparent layer 25 is provided on top, covering both the character elements 22 and retro-reflective layer 23. The optically transparent layer 25 has recesses on its inner side, which are dimensioned to receive the character elements 22. The outer side of the optically transparent layer 25 is flat. Accordingly, the optically transparent layer 25 is in direct contact with the character elements 22, and also with the retro-reflective layer 23 at areas off the character elements 22. Thus, the composition of the optically transparent layer 25, character elements 22 and retro-reflective layer 23 has the same thickness along the area of the license plate. With the license plate having a flat surface, the risk of mud/dirt/ice accumulating at the license plate is reduced.

The optically transparent layer 25 is made of a clear epoxy resin, for example. The optically transparent layer 25 ma alternatively be made of any transparent material having the same or similar electromagnetic properties as the materials of the character elements 22. Clear resin may be used, or Cyclo-Olefin Copolymer (COC), Polyethylene Naphthalate (PEN), Polyetheretherketone (PEEK), etc. The optically transparent layer 25 has the same or alike electromagnetic properties as the materials of the character elements 22. Accordingly, homogeneous electromagnetic properties are provided long the entire area of the license plate 20, such that the full area is suitable for placing even MIMO configuration antennas. A uniform refraction is provided over the full area of the license plate. Further, assembly pins for the character elements 22 is not required, as they are held by the optically transparent layer 25.

**Claims**

1. Radar system (10) for automotive applications, the radar system (10) having a multitude of radar antennas (16, 17) being arranged on a two-dimensional area (11), wherein the two-dimensional area (11) has a length of between 190 and 520 mm and a height of between 80 and 220 mm, wherein at least two of the multitude of antennas (16, 17) are arranged on opposing edges of the two-dimensional area (11).

2. The radar system (10) of claim 1, comprising:
at least two radar subunits (13) arranged on the two-dimensional area (11), each radar subunit (13) having at least one transmitting channel (15) and at least one receiving channel (14), wherein each channel (14, 15) is connected to a separate one of the antennas (16, 17).

3. The radar system (10) of claim 1 or 2, wherein the two-dimensional area (11) has a length of between 275 and 310 mm and a height of between 100 and 120 mm, preferably a length of about 305 mm and a height of about 110 mm.

**4.** The radar system (10) of any one of claims 1-3, wherein the antennas (16, 17) are arranged only on a peripheral section of the two-dimensional area (11), and wherein a central section of the two-dimensional area (11) is free of the antennas (16, 17).

**5.** The radar system (10) of claim 4 in combination with claim 2, wherein the antennas (16, 17) connected to transmitting channels (15) of the radar subunits (13) are arranged on one or more short edges of the two-dimensional area (11), and wherein the antennas (16,17) connected to receiving channels (14) of the radar subunits (13) are arranged on one or more long edges of the two-dimensional area (11), wherein the antennas (16, 17) of the radar subunits (13) are preferably arranged in an L-shaped configuration.

**6.** Component of a vehicle, in particular front component of a vehicle, comprising:

a radar housing; and
a radar system (10) according to any one of claims 1-5 supported by the radar housing.

**7.** The component of claim 6, further comprising a license plate holder, wherein the radar system (10) is supported by the radar housing such that the radar system (10) is arranged behind the license plate holder and such that the two-dimensional area (11) of the radar system (10) is covered by the license plate holder.

**8.** The component of claim 7, further comprising a plastic license plate (20) attached to the license plate holder.

**9.** The component of claim 8, wherein the license plate (20) comprises a base plate (21), and character elements (22) attached to the base plate (21), wherein the material and thickness of the base plate (21) and of the character elements (22) is chosen such that reflection of emitted radar radiation at the license plate (20) is reduced.

**10.** The component of claim 8, wherein the license plate (20) comprises a base plate (21), wherein local deformations of the base plate (21) define characters of the license plate (20), wherein the base plate (21) is formed as an integral part, and wherein the base plate (21) has a uniform thickness.

**11.** The component of claim 8, wherein the license plate (20) comprises a base plate (21), wherein local deformations of the base plate (21) define characters of the license plate (20), wherein the base plate (21) has a uniform thickness, wherein the local deformations of the base plate (21) comprise a first material, and wherein the base plate (21) comprises a second material different from the first material at sections not defining the characters of the license plate (20).

**12.** The component of claim 10 or 11, wherein the distance between the license plate (20) and the radar system (10) and/or the thickness of the base plate (21) is chosen such that reflection of emitted radar radiation at the license plate (20) is reduced.

**13.** The component of claim 8, wherein the license plate (20) comprises a base plate (21) and character elements (22) attached to the base plate (21), further comprising an optically transparent layer (25) covering the base plate (21) and character elements (22), wherein the optically transparent layer (25) comprises recesses on its inner surface dimensioned to receive the character elements (22), and wherein the outer surface of the optically transparent layer (25) is flat.

**14.** The component of claim 13, wherein the electromagnetic properties of the optically transparent layer (25) essentially match the electromagnetic properties of the character elements (22).

**15.** The component of any one of claims 6-14 not in combination with claim 4, wherein at least one of the antennas (16, 17) of the radar system (10) is arranged on central sections of the two-dimensional area (11) of the radar system (10), wherein the at least one of the antennas (16, 17) of the radar system (10) arranged on central sections of the two-dimensional area (11) of the radar system (10) is preferably configured for near range parking applications.

<u>10</u>

305 mm

11

110 mm

12

# Fig. 1

11   13  14  15       16

17

# Fig. 2

11

Fig. 3

Fig. 4

20

W PG 1992

Fig. 5

10

Fig. 6

Fig. 7

Fig. 8

Base plate

Air-Gap

Antenna
Board

Retro-reflective film

3D Solid Letter

$Z_{Air}$
Air

$Z_{Base}$
$\varepsilon_{r_{Base}}$

$Z_{Letter}$
$\varepsilon_{r_{Letter}}$

$Z_{Air}$
Air

$d_{Base}$

$d_{Letter}$

$d_{RRfilm}$

$Z_{RRfilm}$

$\varepsilon_{r_{RRfilm}}$

Fig. 9

Fig. 10

Fig. 11

Fig. 12

Europäisches
Patentamt

European
Patent Office

Office européen
des brevets

# EUROPEAN SEARCH REPORT

**Application Number**

EP 24 16 8127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/149736 A1 (ALLAND STEPHEN W [US] ET AL) 31 May 2018 (2018-05-31) | 1-15 | INV. G01S7/03 G01S13/931 |
| Y | * paragraphs [0007] - [0010], [0043] - [0048]; figures 1, 2B, 3 * <br> * paragraphs [0053] - [0070], [0078]; figures 5A, 5B, 6A, 6B, 7A, 7B * | 1-15 | |
| | ----- | | |
| X | US 2023/253718 A1 (YOU KYUNG JIN [KR]) 10 August 2023 (2023-08-10) | 1-15 | |
| Y | * paragraphs [0004], [0044], [0046], [0050] - [0052], [0056], [0057]; figures 3-5 * | 1-15 | |
| | ----- | | |
| Y | US 2002/067305 A1 (LEBLANC STEPHEN P [US] ET AL) 6 June 2002 (2002-06-06) <br> * paragraphs [0003], [0036], [0042]; figures 1,3 * | 1-15 | |
| | ----- | | |

**TECHNICAL FIELDS SEARCHED (IPC)**

G01S

The present search report has been drawn up for all claims

| Place of search | Date of completion of the search | Examiner |
|---|---|---|
| Munich | 23 August 2024 | Schmelz, Christian |

EPO FORM 1503 03.82 (P04C01)

## ANNEX TO THE EUROPEAN SEARCH REPORT
## ON EUROPEAN PATENT APPLICATION NO.

EP 24 16 8127

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2024

| Patent document cited in search report | | Publication date | Patent family member(s) | | Publication date |
|---|---|---|---|---|---|
| US 2018149736 | A1 | 31-05-2018 | US | 9869762 B1 | 16-01-2018 |
| | | | US | 2018149736 A1 | 31-05-2018 |
| | | | WO | 2018051288 A1 | 22-03-2018 |
| US 2023253718 | A1 | 10-08-2023 | KR | 20230120782 A | 17-08-2023 |
| | | | US | 2023253718 A1 | 10-08-2023 |
| US 2002067305 | A1 | 06-06-2002 | NONE | | |

EPO FORM P0459

For more details about this annex : see Official Journal of the European Patent Office, No. 12/82

**EP 4 628 924 A1**

**Patent documents cited in the description**

- JP H11160426 A